# EUROPEAN PATENT SPECIFICATION

(11) **EP 1 809 007 B1**
(45) Date of publication and mention of the grant of the patent: **14.07.2010**
(21) Application number: 07100114.3
(22) Date of filing: 04.01.2007
(51) Int. Cl.: H04M 1/02

(54) **Portable terminal having sliding module**
Tragbares Endgerät mit Schiebevorrichtung
Terminal portable comportant un module à glissière

(30) Priority: 11.01.2006 KR 20060003299
(43) Date of publication of application: 18.07.2007
(73) Proprietor: Samsung Electronics Co., Ltd., Suwon-si, Gyeonggi-Do (KR)
(72) Inventor: Seo, Jung-Hwan c/o Samsung Electronics Co., Ltd., Gyeonggi-do (KR)
(74) Representative: Grünecker, Kinkeldey, Stockmair & Schwanhäusser Anwaltssozietät

(56) References cited:
- EP-A- 1 422 911
- EP-A- 1 530 345
- KR-A- 20030 090 549
- US-A1- 2005 164 753

## Description

The present invention relates to a portable terminal, and more particularly to a portable terminal having a first housing and a second housing adapted to slide in the longitudinal direction of the first housing so as to expose/hide a portion of the first housing.

In general, portable terminals are classified into bar-type terminals, flip-type terminals, and folder-type terminals according to their appearance.

The bar-type terminals have data input/output means and transmitter/receiver units mounted on a single housing. They have a problem in that the data input means, particularly a keypad, is exposed all the time and is vulnerable to erroneous operation. In addition, the requirement that a distance must be maintained between the transmitter and receiver units limits the degree of compactness of the terminals.

The flip-type terminals have a body, a flip, and a hinge module for connecting the body and the flip to each other. The body is provided with data input/output means and transmitter/receiver units. The flip covers the data input means, particularly a keypad, and prevents erroneous operation. However, the degree of compactness of the flip-type terminals is limited by the need to utilize the body to maintain the distance between the transmitter and receiver units, as done in bar-type terminals.

The folder-type terminals have a body, a folder, and a hinge module for rotatably connecting the body and the folder to each other so that the folder is rotated so as to open/close the terminals. In a standby mode, the folder is folded on the body and prevents erroneous operation of the keypad. In a speech mode, the folder is unfolded from the body so as to secure a sufficient distance between the transmitter and receiver units. As such, the folder-type terminals are advantageous to compactness and, for this reason, have prevailed in the portable terminal industry.

In the case of a flip-type or folder-type terminal, the flip or folder receives force from the hinge module, which rotatably connects the flip or folder to the bodying such a manner that, if the flip or folder has been rotated to a predetermined angle, it is automatically unfolded without additional force and, if not, it remains folded on the body.

Meanwhile, the design of portable terminals has been remarkably diversified and, as a result, sliding-type terminals have been successfully commercialized and overtaken the folder-type terminals in the market. The sliding-type terminals have two housings, one of which is adapted to slide on the other so as to open/close the terminals.

EP-A-1 530 345 refers to a sliding-type mobile communication terminal. The sliding-type mobile terminal includes a first housing and a second housing, wherein the second housing is coupled with the first housing in a face-to-face relation with each other. The second housing is provided with guide rails and a spring module for movably coupling the second housing with the first housing in the longitudinal direction of the first housing. The spring module is coupled onto the first housing so as to provide an elastic force for movement of the second housing in either direction for opening or closing of the keypad and transmitter section on the mobile terminal. The spring module is provided with a module housing and a link assembly equipped on the module housing, and the link assembly is further provided with a link bar, sliders and a coil spring. The module housing is coupled to the front surface of the first housing and is provided with a pair of first protrusions on its inner surface, so that the sliders are rotatably coupled about the first protrusions. Between the first protrusions is an opening extending in the longitudinal direction. The pair of first protrusions are arranged in the middle position of the opening or in the vicinity of the center position of the opening, symmetrical to the opening center. On the outer side of the mobile housing is arranged a guide recess, corresponding to the guide rail. The longitudinal movement of the guide rail within the guide recess allows the second housing to slide on the first housing in its longitudinal direction.

The applicant of the present invention has filed U.S. Patent No. 6,822,871, which discloses a portable terminal having a pair of housings coupled to each other in such a manner that one housing slides relative to the other and a sliding module whereof. In particular, one of the housings is adapted to slide relative to the other so that a part of the other, specifically a keypad, is exposed/hidden. A spring module, which is coupled to one of the pair of housings, and a rail-type sliding guide, which is coupled to the other, connect the housings so that they can slide relative to each other. Besides this type of sliding module, sliding-type portable terminals are equipped with various types of sliding modules, including a sliding module having a sliding plate coupled to one of the housings and a sliding guide coupled to the other.

However, conventional sliding modules have a problem in that they generate noise during the sliding operation, because their components are generally made of a metallic material in order to guarantee both structural stability and reliability. The metallic components make the assembly process complicated. In addition, a separate cover is necessary to contain a spring. This limits the thickness. Furthermore, the housings may vibrate due to a clearance between them resulting from manufacturing tolerance of the components. This hinders the sliding movement.

Accordingly, the present invention has been made to solve the above-mentioned problems occurring in conventional terminals.

It is the object of the present invention to provide a portable terminal having a sliding module, which can be assembled easily, and the thickness of which can be reduced easily.

This object is solved by the subject matter of the independent claims.

Preferred embodiments are defined in the dependent claims.

An aspect of the present invention is to provide a portable terminal having a sliding module adapted to prevent housings of the terminal from vibrating due to a clearance between components so that the housings can slide smoothly.

In order to accomplish the above, there is provided a portable terminal including a first housing; a second housing adapted to slide on the first housing; and a sliding module for coupling the second housing to the first housing so that the second housing can slide, wherein the sliding module includes a sliding guide mounted on the first housing; a sliding plate positioned on the second housing and coupled to the sliding guide so as to slide while facing the sliding guide; at least one first guide rail protruding from a surface of the sliding plate and extending in a movement direction of the sliding plate; a first guide groove formed on a surface of the sliding guide so as to enclose the first guide rail; a second guide rail positioned on the sliding guide so as to extend parallel to the first guide groove; and a second guide groove formed on the sliding plate so as to enclose the second guide rail, and the first and second guide rails and the first and second guide grooves guide the sliding plate so that the sliding plate slides on the sliding guide.

The present invention will be more apparent from the following detailed description taken in conjunction with the accompanying drawings, in which:
FIG. 1 is an exploded perspective view showing a sliding module for a portable terminal according to the present invention;
FIG. 2 is a perspective view of the sliding module shown in FIG. 2 in the process of being coupled to a portable terminal;
FIG. 3 is a sectional view of the sliding module shown in FIG. 1;
FIG. 4 is a perspective view showing a portable terminal equipped with the sliding module show in FIG. 1;
FIG. 5 is a perspective view showing a second housing of the portable terminal shown in FIG. 4 in the process of sliding; and
FIG. 6 is a perspective view showing the second housing of the portable terminal shown in FIG. 4, after it has slid and exposed a keypad of a first housing.

Hereinafter, preferred embodiments of the present invention will be described with reference to the accompanying drawings. In the following description of the present invention, a detailed description of known functions and configurations incorporated herein is omitted to avoid making the subject matter of the present invention unclear.

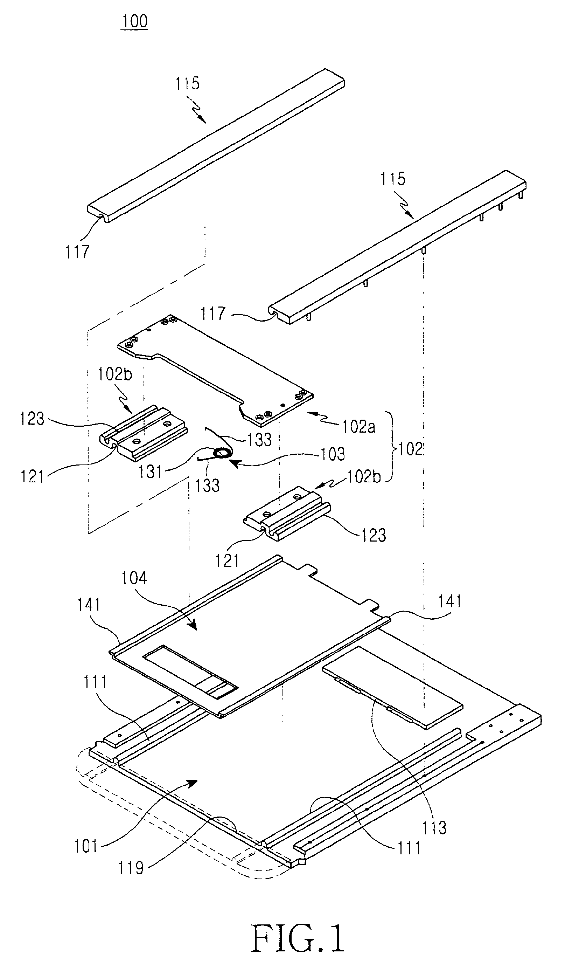

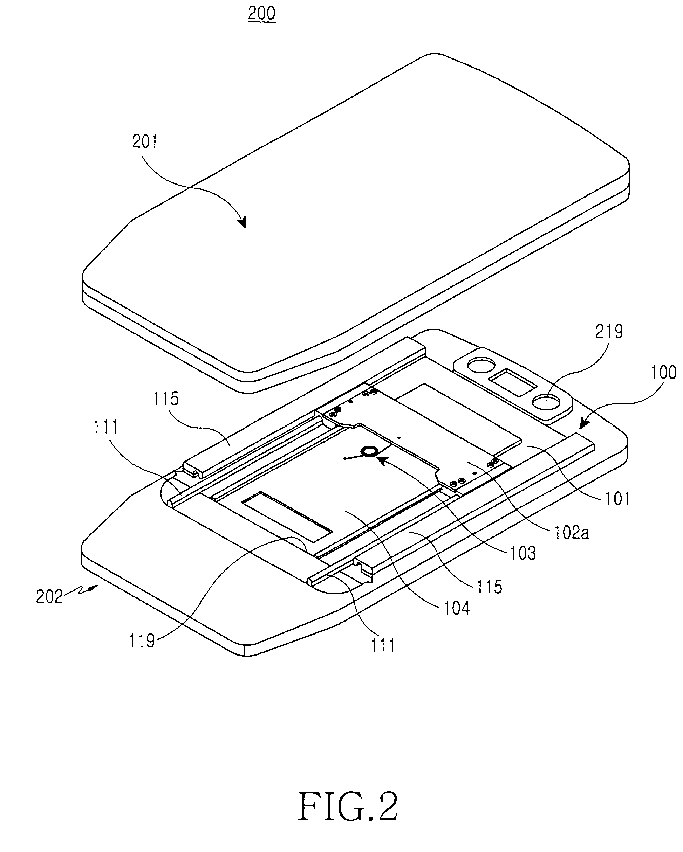

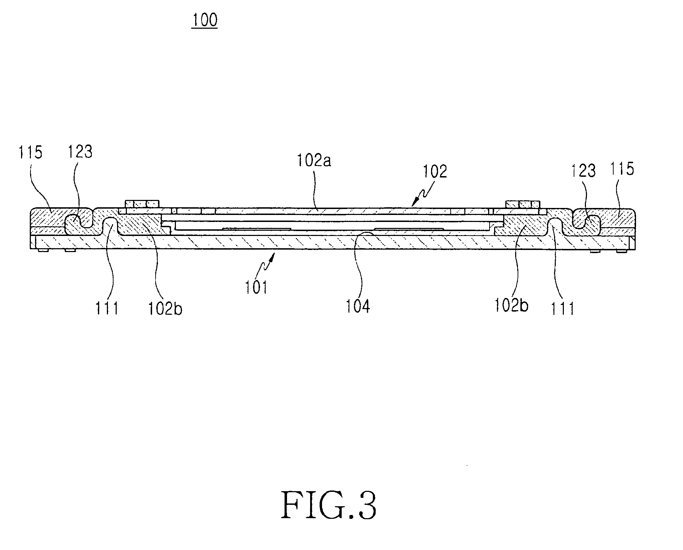

Referring to FIGs. 1 to 3, a sliding module 100 for a portable terminal 200 (shown in FIG. 2) according to the present invention includes a sliding guide 102 mounted on a first housing 201 of the portable terminal 200 and a sliding plate 101 mounted on a second housing 202 of the portable terminal 200 and coupled to the sliding guide 102 while being able to slide. First guide grooves 121 and first guide rails 111 guide the second housing 202 so as to slide on the first housing 201.

The sliding guide 102 includes a fixing plate 102a mounted on the first housing 201 and guide members 102b positioned on both sides of the fixing plate 102a. The fixing plate 102a is made of a metallic material, and the guide members 102b are made of a synthetic resin.

The sliding guide 102 is preferably fabricated as a single unit in consideration of structural stability, reliability, and ease of manufacturing. In addition, use of a metallic material further improves the mechanical properties of the sliding guide 102, such as strength and resistance to wear.

Considering friction resulting from the sliding movement, according to a preferred embodiment of the present invention, the sliding guide 102 has guide members 102b made of a synthetic resin and positioned on parts, which make direct contact with a component, particularly the sliding plate 101. Preferably, the guide members 102b are made of a synthetic resin having resistance to fatigue, toughness, and resistance to wear, such as POM (polyoxymethylene).

Each guide member 102b has a first guide groove 121 and a second guide rail 123, both of which extend in a longitudinal direction of the second housing 202. The first guide grooves 121 face the rear surface of the second housing 202. The second guide rails 123 extend parallel to the first guide grooves 121 and face the front surface of the first housing 201.

The sliding plate 101 is mounted on the rear surface of the second housing 202 and is coupled to the sliding guide 102 so that it can slide while facing the sliding guide 102. The sliding plate 101 has at least one, preferably a pair of first guide rails 111 formed on a surface thereof. The first guide rails 111 protrude from a surface of the sliding plate 101 and extend in the sliding direction of the second housing 202. The first guide rails 111 engage with the first guide grooves 121 in such a manner that they can slide while being enclosed by the first guide grooves 121.

The first guide grooves 121 and the first guide rails 111 guide the sliding movement of the second housing 202. Among the first guide grooves 121 and the first guide rails 111, at least the first guide rails 111 have a curved outer peripheral surface so that, even when any of them are out of manufacturing tolerance, the stability of sliding movement is ensured.

Both the first guide grooves 121 and the first guide rails 111 extend in the sliding direction of the second housing 202 and limit any floating movement of the second housing 202 on its sliding plane so that the second housing 202 moves solely in the sliding direction.

The sliding plate 101 has guide holders 115 and a coupling plate 104 mounted thereon, in order to guide the sliding movement of the second housing 202 and prevent it from escaping from the first housing 201.

The guide holders 115 are mounted on both lateral ends of the sliding plate 101 so as to enclose both lateral ends of the sliding guide 102. Since the sliding guide 102 has the guide members 102b positioned on both sides of the fixing plate 102a, the guide holders 115 enclose the lateral ends of the guide members 102b of the sliding plate 101.

Each guide holder 115 has a second guide groove 117 formed thereon so as to face a surface of the sliding plate 101. The second guide rails 123 of the guide members 102b engage with the corresponding second guide grooves 117 while being able to slide.

The coupling plate 104 is mounted on a surface of the sliding plate 101 and is coupled to the sliding guide 102 so as to slide while facing it. When the first guide rails 111 are provided as a pair, the coupling plate 104 is positioned between the first guide rails 111. The coupling plate 104 has guide ribs 141 formed on both lateral ends thereof so as to slide while being interposed between the fixing plate 102a and the guide members 102b of the sliding guide 102.

The sliding module 100, which is constructed as described above, slidably couples the second housing 202 to the first housing 201. In addition, the sliding module 100 has an elastic member 103 for implementing semi-automatic sliding operation of the second housing 202.

As the elastic member 103, a torsion spring is preferably used in the present invention. The torsion spring has a coil 131 and a pair of free ends 133 extending from both ends of the coil 131 in opposite directions. The torsion spring exerts elastic force in such a direction that the free ends 133 move away from each other.

Although a torsion spring is used as the elastic member 103 in the present embodiment, any type of elastic member may be used for the sliding module 100 according to the present invention, as long as it can exert elastic force in a direction moving both ends move away from each other. For example, a compressed coil spring or a push rod incorporating a compressed coil spring may be used.

Furthermore, it can be easily understood by those skilled in the art that, although a single elastic member may be used in the present invention, it is preferable to use at least one pair of elastic members may be used in conformity with the construction of the sliding module.

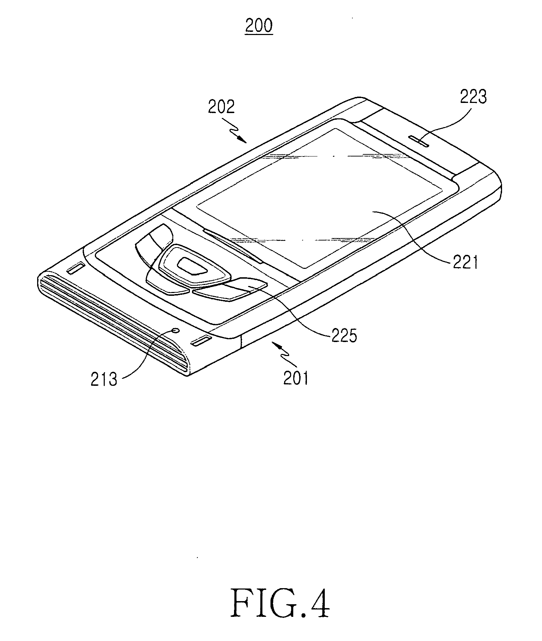

One of the free ends 133 of the elastic member 103 is supported on the sliding guide 102 and the other is supported on the second housing 202, particularly on the coupling plate 104. The free ends 133 are closest to each other when the second housing 202 is positioned at a specific location within its sliding range. When the second housing 202 is positioned on one side of the specific location, a driving force is generated in such a direction that the second housing 202 hides the first housing 201 and, when positioned on the other side of the specific location, the driving force is generated in such a direction that the second housing 202 exposes the first housing 201. The driving force is based on the action of the elastic member 103, as will be described in more detail with reference to FIGs. 4 to 6.

Assuming that the sliding direction of the second housing 202 is a Y direction, a direction perpendicular to the Y direction on a sliding plane of the second housing 202 is an X direction, and a direction perpendicular to the sliding plane of the second housing 202 is a Z direction, the sliding module 100 guides the movement of the second housing 202 in the Y direction while limiting its floating movement in the X and Z directions.

Movement of the second housing 202 in the Y direction is guided by the first and second guide rails 111 and 123, as well as the first and second guide grooves 121 and 117. In addition, the fact that both lateral ends of the coupling plate 104 is interposed between the fixing plate 102a and the guide members 102b further improves the stability.

The first and second guide rails 111 and 123, which extend in the Y direction, engage with the first and second guide grooves 121 and 117, respectively, which also extend in the Y direction, in order to limit the floating movement of the second housing 202 in the X direction. Preferably, the first and second guide rails 111 and 123 have a curved outer peripheral surface, and the first and second guide grooves 121 and 117 have a curved inner peripheral surface, In this case, the curved inner and outer peripheral surfaces cause the corresponding components to remain closely coupled to each other, even when a clearance occurs between them, such as clearance due to manufacturing tolerance, for example. This guarantees smooth sliding movement.

The guide holders 115 and the coupling plate 104 are used to limit floating movement of the second housing 202 in the Z direction. In particular, the guide holders 115 are mounted on the sliding plate 101 in such a manner that both lateral ends of the sliding guide 101 (specifically, the lateral end of each guide member 102b) are interposed between the sliding plate 101 and the guide holders 115. This prevents the second housing 202 from escaping from the first housing 201 or floating in the Z direction. The second guide grooves 117, which are formed on the guide holders 115, engage with the second guide rails 123, which are formed on the guide members 102b, in order to guide the movement of the second housing 202 in the Y direction and limit its floating movement in the X direction.

Similarly, the guide ribs 141 of the coupling plate 104 are interposed between the fixing plate 102a and the guide members 102b of the sliding guide 102, in order to prevent the second housing 202 from escaping or floating in the Z direction.

It is to be noted that, in contrast to the guide holders 115, which prevent the second housing 202 from escaping or floating in the X or Z direction while guiding its Y direction movement, the coupling plate 104 solely prevents the second housing 202 from escaping or floating in the Z direction. Therefore, the coupling plate 104 may be omitted as long as the guide holders 115 alone can prevent the second housing 202 from escaping or floating in the Z direction.

In order to limit the range of sliding movement of the second housing 202, the sliding plate 101, particularly the first guide rails 111, have latching steps 113 and 119 formed on both ends thereof, respectively. When the second housing 202 slides, one of the latching steps 113 and 119 interferes with the sliding guide 102 and limits the range of sliding movement of the second housing 202.

It is to be noted that the sliding plate 101 of the sliding module 100 may be integrally formed on the second housing 202. Particularly, when the second housing 202 is fabricated in an injection process using a synthetic resin, as in the case of housings of conventional terminals 200, the first guide rails 111 and the latching steps 113 and 119 may be integrally formed on the rear surface of the second housing 202.

Preferably, when the sliding plate 101 is integral with the second housing 202, the guide holders 115 and the coupling plate 104 are directly mounted on the rear surface of the second housing 202.

FIGs. 4 through 6 show a series of steps for exposing the first housing 201 of the portable terminal 200 equipped with the sliding module 100 shown in FIG. 1.

The terminal 200 includes a first housing 201 typically containing a main board (not shown) and a second housing 202 provided with a display device 221, for example. When the second housing 202 slides on the first housing 201, a portion of the first housing 201 is exposed/hidden accordingly.

The first housing 201 is provided with a transmitter unit 213 and a keypad 211, which is exposed/hidden by the sliding movement of the second housing 202. The second housing 202 has a functional keypad 225 and a receiver unit 223 positioned on both sides of the display device 221, respectively. A camera lens 219 (shown in FIG. 2) is positioned on a surface of the second housing 202, which is opposite the receiver unit 223, and is exposed/hidden by the sliding movement of the second housing 202.

If the sliding module 100 is not provided with the elastic member 103, the user must slide the second housing 202 manually when the user wants to expose or hide the keypad 211.

In contrast, if the sliding module 100 is provided with the elastic member 103, the user has only to partially slide the second housing 202 in the range of sliding movement when the user wants to expose or hide the keypad 211.

Referring to FIG. 4, the keypad 211 is hidden by the second housing 202. In this case, the elastic member 103 exerts elastic force in such a direction that the free ends 133 move away from each other. As a result, the second housing 202 continuously hides the keypad 211. One of the latching steps 113 and 119 interferes with the sliding guide 102 and prevents the second housing 202 from moving any further.

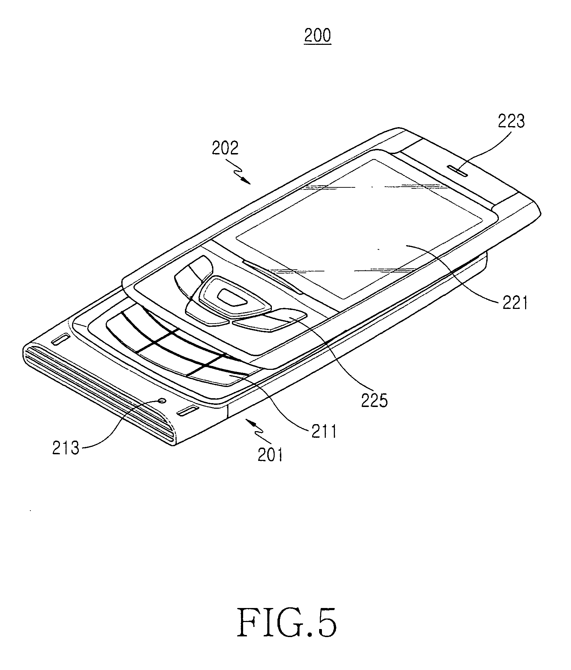

Referring to FIG. 5, the user slides the second housing 202 in a direction to expose the keypad 211. As a result, the free ends 133 of the elastic member 103 gradually approach each other, and the elastic member 103 accumulates elastic force.

As the keypad 211 is gradually exposed, the elastic force accumulated on the elastic member 103 begins to slide the second housing 202 in such a direction that the keypad 211 is hidden.

The direction of the elastic force accumulated on the elastic member 103 varies after the second housing 202 passes a specific location wherein the free ends 133 are closest to each other. More particularly, when the second housing 202 is moved in such a direction that the keypad 211 is exposed, it approaches a specific location where the free ends 133 are closest to each other. After the second housing 202 passes that location, the elastic force from the elastic member 103 moves the second housing 202 in such a direction that the keypad 211 is exposed.

Hereinafter, the second housing 202 is said to be in a first region when it is positioned on one side of the specific location wherein the free ends 133 are closest to each other and when the elastic force acts in such a direction to hide the keypad 211. Similarly, the second housing 202 is said to be in a second region when it is positioned on the other side of the specific location and when the elastic force acts in such a direction to expose the keypad 211.

As such, the elastic member 103 of the sliding module 100 exerts elastic force in such a direction that the keypad 211 is either exposed or hidden, based on the location of the second housing 202 in the sliding range. Particularly, the elastic member 103 moves the second housing 202, when in the first region, in a direction to hide the keypad 211 and, when in the second region, in a direction to expose the keypad 211.

Therefore, the user only has to partially slide the second housing 202 when the user wants to expose or hide the keypad 211, because driving force is generated so as to fully move the second housing 202.

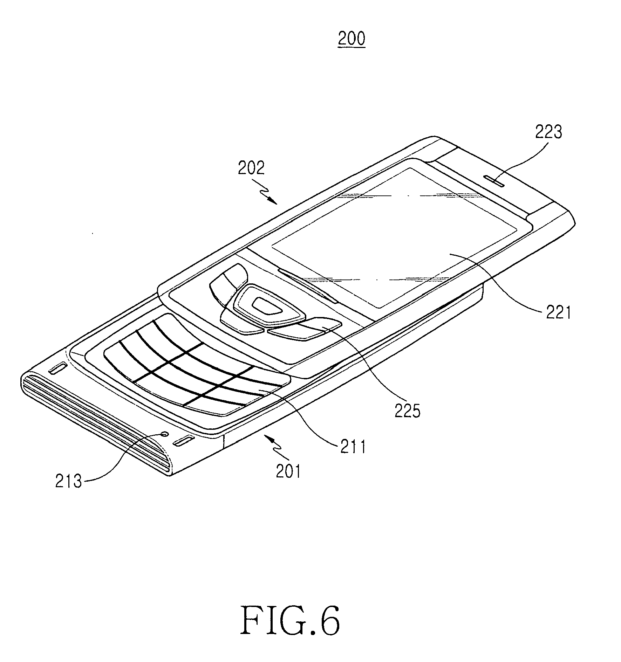

Referring to FIG. 6, the keypad 211 is completely exposed by the second housing 202. In this case, the elastic force from the elastic member 103 continuously acts on the second housing 202 in a direction to expose the keypad 211. The other latching step 113 of the sliding plate 101 interferes with the sliding guide 102 and prevents the second 202 from moving any further, as long as the keypad 211 is exposed.

The sliding plate 101 of the sliding module 100 may be integral with the second housing 202, in order to reduce the number of components of the sliding module 100 and the manufacturing process, although the preferred embodiment of the present invention has been described with reference to a sliding plate 101, which is separate from the second housing 202, for the purpose of clarifying the construction of the sliding module 100.

As mentioned above, the sliding module for a portable terminal according to the present invention uses guide rails, guide grooves, and guide holders so as to smoothly guide the sliding movement of the second housing while limiting its floating movement in a direction different from the sliding direction. The sliding plate, which carries the guide rails, etc., may be integral with a housing of the terminal, in order to reduce the number of components and the material cost, as well as simplify the manufacturing process, reducing manufacturing cost. The guide rails and the guide grooves have curved inner and outer peripheral surfaces, respectively, in order to prevent the housings of the terminal from vibrating due to manufacturing tolerance, for example, and to guarantee smooth sliding movement of the housings. The guide rails and the guide grooves engage each other in such a manner that the housings are stably coupled to each other while being able to slide smoothly.

While the invention has been shown and described with reference to certain preferred embodiments thereof, it will be understood by those skilled in the art that various changes in form and details may be made therein without departing from the scope of the invention as defined by the appended claims.

## Claims

1. A portable terminal comprising:
a first housing (201);
a second housing (202) adapted to slide on the first housing (201); and
a sliding module (100) slidably coupling the second housing (202) to the first housing (201), wherein the sliding module (100) comprises:
a sliding guide (102) mounted on the first housing (201);
a sliding plate (101) positioned on the second housing (202), slidably coupled to and facing the sliding guide (102);
a first guide rail (111) protruding from a surface of the sliding plate (101) and extending in a longitudinal direction;
a first guide groove (121) formed on a surface of the sliding guide (102) to enclose the first guide rail (111);
a second guide rail (123) positioned on the sliding guide (102) extending parallel to the first guide groove (121); and
a second guide groove (117) formed on the sliding plate (101) so as to enclose the second guide rail (123),
wherein the first and second guide rails (111, 123) and the first and second guide grooves (121, 117) are arranged to guide the sliding plate (101) for allowing the sliding plate to perform sliding movements on the sliding guide (102).

2. The portable terminal as claimed in claim 1, wherein the sliding plate (101) is integrally formed on the second housing (202).

3. The portable terminal as claimed in claim 1 or 2, wherein a pair of first guide rails (111) extend parallel to each other, and a pair of first guide grooves (121) are adjacent to respective lateral ends of the sliding guide (102).

4. The portable terminal as claimed in one of claims 1 to 3, wherein the first guide rail (111) has a curved outer peripheral surface.

5. The portable terminal as claimed in one of claims 1 to 4, wherein the sliding plate (101) has guide holders (115) mounted on each respective lateral end, and both lateral ends of the sliding guide (102) are interposed between the sliding plate (101) and the guide holders (115).

6. The portable terminal as claimed in claim 5, wherein the second guide groove (117) is formed on each respective guide holder (115) and positioned facing the sliding plate (101), and the second guide rail (123) is formed on the lateral end of the sliding guide (102) so as to be enclosed by the second guide groove (117).

7. The portable terminal as claimed in one of claims 1 to 6, wherein a pair of first and second guide rails (111,123) extend parallel to each other, and the sliding module (100) further comprises a coupling plate (104) mounted on a surface of the sliding plate (101) and positioned between the pair of first guide rails (111).

8. The portable terminal as claimed in one of claims 1 to 7, wherein the sliding guide (102) has a fixing plate (102a) mounted on the first housing (201) and guide members (102b) fixed to both sides of the fixing plate (102a), respectively, and the first guide groove (121) is formed on each guide member (102b).

9. The portable terminal as claimed in claim 8, wherein the sliding module (100) further comprises a coupling plate (104) mounted on the sliding plate (101), and both ends of the coupling plate (104) are interposed between the fixing plate (102a) and the guide members (102b).

10. The portable terminal as claimed in one of claims 1 to 9, further comprising at least one elastic member (103) having a coil (131) and a pair of free ends extending from both ends of the coil (131) away from each other, the free ends being supported on the sliding guide and the sliding plate (101), respectively.

11. The portable terminal as claimed in claim 10, wherein the free ends are closest to each other when the sliding plate (101) is at a predetermined location within a movement range, and the elastic member (103) exerts an elastic force in a direction moving the free ends away from each other.

12. The portable terminal as claimed in one of claims 1 to 11, wherein latching steps (113) are formed on both ends of the sliding plate (101), and, when the sliding plate slides, the sliding guide (102) interferes with the latching steps (113) and limits a movement range of the sliding plate.

13. The portable terminal as claimed in one of claims 1 to 12, wherein the first guide groove (121) is formed on a surface of the sliding guide (102), and the second guide rail (123) is formed on a different surface of the sliding guide (102).

## Patentansprüche

1. Tragbares Endgerät, das umfasst:
ein erstes Gehäuse (201);
ein zweites Gehäuse (202), das so eingerichtet ist, dass es an dem ersten Gehäuse (201) gleitet; und
ein Schiebemodul (100), das das zweite Gehäuse (2) verschiebbar mit dem ersten Gehäuse (201) verbindet, wobei das Schiebemodul (100) umfasst:
eine Schiebeführung (102), die an dem ersten Gehäuse (201) angebracht ist;
eine Schiebeplatte (101), die an dem zweiten Gehäuse (202) positioniert ist und mit der Schiebeführung (102) verschiebbar gekoppelt und ihr zugewandt ist;
eine erste Führungsschiene (111), die von einer Oberfläche der Schiebeplatte (101) vorsteht und sich in einer Längsrichtung erstreckt;
eine erste Führungsnut (121), die an einer Oberfläche der Schiebeführung (102) ausgebildet ist und die erste Führungsschiene (111) umschließt;
eine zweite Führungsschiene (123), die an der Schiebeführung (102) angeordnet ist und parallel zu der ersten Führungsnut (121) verläuft; und
eine zweite Führungsnut (117), die an der Schiebeplatte (101) so ausgebildet ist, dass sie die zweite Führungsschiene (123) umschließt,
wobei die erste und die zweite Führungsschiene (111, 123) sowie die erste und die zweite Führungsnut (121, 117) so angeordnet sind, dass sie die Schiebeplatte (101) führen, so dass die Schiebeplatte Schiebebewegungen an der Schiebeführung (102) durchführen kann.

2. Tragbares Endgerät nach Anspruch 1, wobei die Schiebeplatte (101) integral an dem zweiten Gehäuse (202) ausgebildet ist.

3. Tragbares Endgerät nach Anspruch 1 oder 2, wobei ein Paar erster Führungsschienen (111) parallel zueinander verlaufen und ein Paar erster Führungsnuten (121) an jeweilige seitliche Enden der Schiebeführung (102) angrenzen.

4. Tragbares Endgerät nach einem der Ansprüche 1 bis 3, wobei die erste Führungsschiene (111) eine gekrümmte Außenumfangsfläche hat.

5. Tragbares Endgerät nach einem der Ansprüche 1 bis 4, wobei die Schiebeplatte (101) Führungshalter (115) aufweist, die an jedem entsprechenden seitlichen Ende angebracht sind, und beide seitlichen Enden der Schiebeführung (102) zwischen der Schiebeplatte (101) und den Führungshaltern (115) angeordnet sind.

6. Tragbares Endgerät nach Anspruch 5, wobei die zweite Führungsnut (117) an jedem entsprechenden Führungshalter (115) ausgebildet und der Schiebeplatte (101) zugewandt positioniert ist und die zweite Führungsschiene (123) an dem seitlichen Ende der Schiebeführung (102) so ausgebildet ist, dass sie von der zweiten Führungsnut (117) umschlossen wird.

7. Tragbares Endgerät nach einem der Ansprüche 1 bis 6, wobei ein Paar erster und zweiter Führungsschienen (111, 123) parallel zueinander verlaufen und das Schiebemodul (100) des Weiteren eine Kopplungsplatte (104) umfasst, die an einer Oberfläche der Schiebeplatte (101) angebracht und zwischen den paarigen ersten Führungsschienen (111) positioniert ist.

8. Tragbares Endgerät nach einem der Ansprüche 1 bis 7, wobei die Schiebeführung (102) eine Befestigungsplatte (102a), die an dem ersten Gehäuse (201) angebracht ist, und Führungselemente (102b) aufweist, die jeweils an beiden Seiten der Befestigungsplatte (102a) befestigt sind, und die erste Führungsnut (121) an jedem Führungselement (102b) ausgebildet ist.

9. Tragbares Endgerät nach Anspruch 8, wobei das Schiebemodul (100) des Weiteren eine Kopplungsplatte (104) umfasst, die an der Schiebeplatte (101) angebracht ist, und beide Enden der Kopplungsplatte (104) zwischen der Befestigungsplatte (102a) und den Führungselementen (102b) angeordnet sind.

10. Tragbares Endgerät nach einem der Ansprüche 1 bis 9, das des Weiteren wenigstens ein elastisches Element (103) umfasst, das eine Windung (131) und ein Paar freier Enden aufweist, die sich von beiden Enden der Windung (131) voneinander weg erstrecken, wobei die freien Enden von der Schiebeführung bzw. der Schiebeplatte (101) getragen werden.

11. Tragbares Endgerät nach Anspruch 10, wobei die freien Enden am nächsten beieinander liegen, wenn sich die Schiebeplatte (101) an einer vorgegebenen Position innerhalb eines Bewegungsbereiches befindet, und das elastische Element (103) eine elastische Kraft in einer Richtung ausübt, in der die freien Enden voneinander wegbewegt werden.

12. Tragbares Endgerät nach einem der Ansprüche 1 bis 11, wobei Arretierabsätze (113) an beiden Enden der Schiebeplatte (101) ausgebildet sind, und, wenn die Schiebeplatte gleitet, die Schiebeführung (102) an den Arretierabsätzen (113) anschlägt und einen Bewegungsbereich der Schiebeplatte begrenzt.

13. Tragbares Endgerät nach einem der Ansprüche 1 bis 12, wobei die erste Führungsnut (121) an einer Oberfläche der Schiebeführung (102) ausgebildet ist und die zweite Führungsschiene (123) an einer anderen Fläche der Schiebeführung (102) ausgebildet ist.

## Revendications

1. Terminal portable comprenant :
un premier boîtier (201),
un second boîtier (202) conçu pour coulisser sur le premier boîtier (201),
un module de coulissement (100) raccordant, pour qu'il puisse coulisser, le second boîtier (202) au premier boîtier (201), le module de coulissement (100) comprenant :
un guide de coulissement (102) monté sur le premier boîtier (201),
une plaque coulissante (101) positionnée sur le second boîtier (202), accouplée avec une possibilité de coulissement au guide de coulissement (102) et lui faisant face,
un premier rail de guidage (111) dépassant d'une surface de la plaque coulissante (101) et s'étendant dans la direction longitudinale,
une première rainure de guidage (121) formée sur une surface du guide de coulissement (102) de façon à contenir le premier rail de guidage (111),
un second rail de guidage (123) positionné sur le guide de coulissement (102) s'étendant en parallèle à la première rainure de guidage (121), et
une seconde rainure de guidage (117) formée sur la plaque coulissante (101) de façon à contenir le second rail de guidage (123),
dans lequel les premiers et seconds rails de guidage (111, 123) et les premières et secondes rainures de guidage (121, 117) sont disposés pour guider la plaque coulissante (101) afin de permettre à la plaque de coulissement d'effectuer des mouvements de coulissement sur le guide de coulissement (102).

2. Terminal portable selon la revendication 1, dans lequel la plaque coulissante (101) est formée de manière intégrée sur le second boîtier (202).

3. Terminal portable selon la revendication 1 ou 2, dans lequel les deux premiers rails de guidage (111) s'étendent parallèlement l'un à l'autre, et les deux rainures de guidage (121) sont adjacentes aux extrémités latérales respectives du guide de coulissement (102).

4. Terminal portable selon l'une des revendications 1 à 3, dans lequel le premier rail de guidage (111) présente une surface périphérique extérieure courbe.

5. Terminal portable selon l'une des revendications 1 à 4, dans lequel la plaque coulissante (101) comporte des dispositifs de soutien de guidage (115) montés sur chaque extrémité latérale respective, et les deux extrémités latérales du guide de coulissement (102) sont intercalées entre la plaque coulissante (101) et les dispositifs de soutien de guidage (115).

6. Terminal portable selon la revendication 5, dans lequel la seconde rainure de guidage (117) est formée sur chaque dispositif respectif de soutien de guidage (115) et positionnée en faisant face à la plaque coulissante (101), et le second rail de guidage (123) est formé sur l'extrémité latérale du guide de coulissement (102) de façon à être enfermé par la seconde rainure de guidage (117).

7. Terminal portable selon l'une des revendications 1 à 6, dans lequel les deux premiers et seconds rails de guidage (111, 123) s'étendent parallèlement les uns aux autres, et le module de coulissement (100) comprend en outre une plaque d'accouplement (104) montée sur une surface de la plaque coulissante (101) et positionnée entre la paire de premiers rails de guidage (111).

8. Terminal portable selon l'une des revendications 1 à 7, dans lequel le guide de coulissement (102) comporte une plaque de fixation (102a) montée sur le premier boîtier (201) et des éléments de guidage (102b) fixés respectivement sur les deux côtés de la plaque de fixation (102a), et la première rainure de guidage (121) est formée sur chaque élément de guidage (102b).

9. Terminal portable selon la revendication 8, dans lequel le module de coulissement (100) comprend en outre une plaque d'accouplement (104) montée sur la plaque coulissante (101), et les deux extrémités de la plaque d'accouplement (104) sont intercalées entre la plaque de fixation (102a) et les éléments de guidage (102b).

10. Terminal portable selon l'une des revendications 1 à 9, comprenant en outre au moins un élément résilient (103) comportant un bobinage (131) ainsi qu'une paire d'extrémités libres s'étendant depuis les deux extrémités du bobinage (131) à distance l'une de l'autre, les extrémités libres étant respectivement supportées sur le guide de coulissement et la plaque coulissante (101).

11. Terminal portable selon la revendication 10, dans lequel les extrémités libres sont les plus rapprochées l'une de l'autre lorsque la plaque coulissante (101) se trouve à un emplacement prédéterminé dans une plage de déplacement, et l'élément résilient (103) exerce une force élastique dans un sens écartant les extrémités libres l'une de l'autre.

12. Terminal portable selon l'une des revendications 1 à 11, dans lequel des paliers d'encliquetage (113) sont formés sur les deux extrémités de la plaque coulissante (101) et, lorsque la plaque coulissante glisse, le guide de coulissement (102) vient interférer avec les paliers d'encliquetage (113) et limite la plage de déplacement de la plaque coulissante.

13. Terminal portable selon l'une des revendications 1 à 12, dans lequel la première rainure de guidage (121) est formée sur une surface du guide de coulissement (102), et le second rail de guidage (123) est formé sur une surface différente du guide de coulissement (102).
